# EUROPÄISCHE PATENTSCHRIFT

(11) **EP 1 649 962 B1**
(45) Veröffentlichungstag und Bekanntmachung des Hinweises auf die Patenterteilung: **16.01.2008**
(21) Anmeldenummer: 05015357.6
(22) Anmeldetag: 14.07.2005
(51) Int. Cl.: B23K 9/20

(54) **Verfahren und System zum Verschweissen eines eine kegelartige Stirnfläche aufweisenden Bolzens mit einem Träger, mit einem Abhubmass vom 1 bis 2.5 mm und einer Neigung der kegelartigen Stirnfläche von 4° +- 2.5°**
Process and system for welding a stud with conical contact surface with a support, with a lifting height from 1 to 2.5 mm and an angle for the conical surface of 4° +- 2.5°
Procédé et système de soudage d'un goujon avec une surface de contact conique, avec une distance de rétractation de 1 à 2.5 mm et un angle de cône de 4° +- 2.5°

(30) Priorität: 21.10.2004 DE 102004051389
(43) Veröffentlichungstag der Anmeldung: 26.04.2006
(73) Patentinhaber: Heinz Soyer Bolzenschweisstechnik GmbH, 82237 Wörthsee (DE)
(72) Erfinder: Reiter, Thomas, Dr., 85256 Vierkirchen (DE); Dibiasi, Lino, 82110 Germering (DE)
(74) Vertreter: Rupp, Christian

(56) Entgegenhaltungen:
- DE-A1- 3 828 459
- DE-A1- 4 401 881
- DE-A1- 19 508 380
- DE-U1- 20 022 481
- US-A- 4 465 917
- US-A- 5 618 491
- US-B1- 6 762 392

## Beschreibung

Die vorliegende Erfindung betrifft ein Verfahren bei dem ein eine kegelartige Stirnfläche aufweisender Bolzen im Rahmen eines sogenannten Hubzündungsverfahrens mit einem Träger verschweißt wird und ein System zum Verschweißen eines Bolzens mit einem Träger gemäß dem Oberbegriff der Ansprüche 1 und 10 (siehe, z.B., US 6 762 392 B1).

Für das Verschweißen von Bolzen mit Trägern sind unterschiedliche Verfahren und Vorgehensweisen bekannt. Beispielsweise werden in der EN ISO 14555 die Verfahren Bolzenschweißen, Kurzzeitbolzenschweißen und Kondensator-Entladungsschweißen beschrieben. Darüber hinaus ist für rohrförmige Bauteile mit einer im wesentlichen ringförmigen Stirnfläche das sogenannte MBL-Schweißen (Schweißen mit bewegtem Lichtbogen) bekannt, bei dem der Lichtbogen während des Schweißvorgangs durch ein Magnetfeld in Rotation versetzt und damit dazu veranlasst wird, die ringförmige Stirnfläche des anzuschweißenden Werkstücks gleichmäßig zu überstreifen.

Die oben genannten Verfahren zum Verschweißen von Bolzen mit Trägern beinhalten jeweils besondere Vor- und Nachteile, welche die Nutzung dieser Verfahren auf jeweils einzelne Anwendungsbereiche beschränken und nachfolgen kurz zusammengefasst werden sollen.

Das normale Bolzenschweißen für Hubzündungsbolzen wird mit Schweißzeiten im Bereich von 100 bis 3.000 ms eingesetzt, wobei hierbei Bolzen mit einem Durchmesser von 3 bis 25 mm verschweißt werden können. Die kegelartig ausgestaltete Bolzenspitze weist in diesem Fall gemäß der EN ISO 13918 eine Neigung von 22,5° ± 5° auf.

Bei diesem konventionellen Hubzündungsschweißen werden Ströme im Bereich zwischen 200 und 3.000 A eingesetzt, wobei die dabei erzielbaren Stromdichten allerdings lediglich einen Lichtbogen mit einem begrenzten Querschnitt ausbilden können. Um bei diesem Verfahren ein gleichmäßiges Anschmelzen der Querschnittsfläche des Bolzens sicherzustellen, ist demzufolge die verhältnismäßig hohe Neigung der Oberfläche der Bolzenspitze erforderlich, durch die sichergestellt wird, dass der Lichtbogen im Zentrum des Bolzens zündet. Auf dieser Schmelze oder am Rand davon allerdings bewegt sich dann der Lichtbogen ungestört bzw. unkontrolliert weiter, wobei durch dessen Energieeintrag weiter außen liegende Bolzenbereiche ebenfalls angeschmolzen werden. Geschmolzenes Material sammelt sich dann im Zentrum des Bolzens an, was zu Tropfenübergängen mit oder ohne Kurzschluss führen kann.

Bolzen und Grundmaterial werden bei diesem Verfahren mechanisch gefügt, wodurch mehr Schmelzmaterial anfällt, als für eine Verbindung eigentlich benötigt würde. Dieses überflüssige Material wird deshalb bis zu seiner Erstarrung über Keramikringe fixiert, die dann anschließend in einem separaten Arbeitsschritt entfernt werden müssen.

Beim Kurzzeitbolzenschweißen unter Schutzgas liegen im Vergleich zu dem zuvor diskutierten Verfahren Schweißzeiten von weniger als 100 ms vor. Mit diesem Verfahren können Bolzen von 8 bis 12 mm Durchmesser verschweißt werden, wobei die Bolzenspitze nunmehr eine Neigung von 7° ± 1° aufweist.

Aufgrund der geringeren Bolzenneigung muss zwar im Vergleich zum konventionellen Hubzündungsschweißen weniger Bolzenmaterial abgeschmolzen werden, auch hier besteht allerdings die Gefahr, dass sich der Lichtbogen unkontrolliert an der Schmelze entlang bewegt und sich das flüssige Material wiederum im Zentrum des Bolzens ansammelt, was zu unkontrollierten Tropfen und Übergängen sowie eventuellen Kurzschlussbildungen führen kann. Problematisch ist ferner, dass dieses Verfahren besonders anfällig für die sog. Blaswirkung ist, die zu einer einseitigen Verdrängung des Lichtbogens in Richtung des Bolzenrands und dementsprechend zu unzureichenden Schweißergebnissen führen kann.

Beim Kondensatorentladungsschweißen werden wiederum nochmals deutlich kürzere Schweißzeiten von weniger als 10 ms verwendet, wobei dieses Verfahren allerdings lediglich für Bolzen mit einem Durchmesser im Bereich von 3 bis 10 mm eingesetzt werden kann. Die Bolzen weisen hierbei an ihrem Stirnbereich eine Neigung von 3 ± 1° sowie eine sog. Zündspitze auf.

Das Kondensatorentladungsschweißen beruht darauf, dass der Lichtbogen durch eine teilweise Verdampfung der Zündspitze gezündet und hierbei ausreichend ionisiertes Material geliefert wird, um einen Lichtbogen über die gesamte Flanschfläche zu erzeugen. Dies kann allerdings ausschließlich durch extrem hohe Ströme von bis zu 10.000 A und damit verbundene extrem hohe Stromdichten erreicht werden, wobei nur wenig Material vor dem Fügeprozess angeschmolzen wird.

Nachteilig bei diesem Verfahren ist, dass im Vorfeld die Schweißenergie gespeichert werden muss, weshalb nur recht kurze Schweißzeiten umsetzbar sind. Das bekannte Verfahren bietet zwar gewisse Vorteile beim Verschweißen von Bolzen auf dünnen Flächen, bei einem dicken Trägermaterial ist die Wärmeableitung im Grundmaterial allerdings derart hoch, dass der Träger vor dem Fügeprozess nicht mehr ausreichend angeschmolzen werden kann. Desweiteren ist dieses Verfahren gegen äußere Einflüsse wie z.B. Oberflächenverschmutzungen des Grundmaterials sehr empfindlich, weshalb größere Bolzen auch mit größeren Schweißströmen nicht geschweißt werden können.

Das ebenfalls erwähnte Schweißen mit bewegtem Lichtbogen (MBL-Schweißen) beruht darauf, dass der Lichtbogen während des Schweißvorganges einem Quermagnetfeld ausgesetzt wird, welches den Lichtbogen seitlich ablenkt und hierdurch in eine kreisförmige Bewegung versetzt. Dementsprechend wurde dieses Verfahren bislang überwiegend zum Verschweißen ringförmiger Werkstücke eingesetzt, was beispielsweise in den beiden Veröffentlichungen DE 101 43 220 C1 und DE 102 21 387 C1 der Anmelderin beschrieben ist.

Zwar ist aus den beiden Offenlegungsschriften DE 34 38 043 A1 und DE 36 31 598 A1 bereits der Gedanke bekannt, auch bei Bolzen aus Vollmaterial ein Quermagnetfeld im Bereich der Schweißstelle zu erzeugen, dies erfolgt allerdings dazu, die magnetische Blaswirkung des Lichtbogens zu verringern. Darüber hinaus hat sich gezeigt, dass bei den bislang verwendeten Bolzen aus Vollmaterial die Wirkung des magnetischen Querfelds nur unzureichend ist, da aufgrund der starken Neigung der Bolzenspitze das durch den Lichtbogen abgeschmolzene Material wiederum dazu neigt, sich an der Spitze des Bolzens anzusammeln und einen Kurzschluss zwischen dem Bolzen und dem Träger zu erzeugen. Bei einem aus der US 6 762 392 B1 bekannten Verfahren wird dementsprechend versucht, den Lichtbogen mit Hilfe eines Magnetfelds bewusst auf die Längsachse des Bolzens zu fokussieren.

Ein allgemeines Problem der bekannten Schweißverfahren, die auch ein Verschweißen dickerer Bolzen aus Vollmaterial ermöglichen, besteht also darin, dass die Bolzen eine kegelartige Stirnfläche mit einer verhältnismäßig starken Neigung aufweisen müssen, um ein möglichst gleichmäßiges Anschmelzen durch den Lichtbogen sicherzustellen. Hieraus ergibt sich jedoch das Problem, dass auch relativ viel Material abgeschmolzen werden muss, um eine flächige Verbindung zwischen dem Bolzen und dem Träger zu erzielen, was wiederum in langen Schweißzeiten, einem hohen Energieaufwand und dementsprechend auch in einer hohen thermischen Belastung für den Träger resultiert. Weitere Schwierigkeiten bestehen ferner darin, dass aufgrund der großen Menge des abzuschmelzenden Bolzenmaterials dieses seitlich von der Schweißstelle austreten kann, wodurch die Qualität der Schweißung beeinträchtigt wird. Um das seitliche Austreten des Materials zumindest teilweise zu unterbinden, werden dementsprechend Keramikringe oder -hülsen eingesetzt, die nach der Beendigung des Schweißvorgangs in einem separaten Arbeitsschntt wieder entfernt werden müssen. Problematisch ist schließlich auch, dass die in den oben beschriebenen Verfahren zum Einsatz kommenden Bolzen nur sehr aufwendig und damit kostenintensiv herzustellen sind und darüber hinaus auch keine Möglichkeit besteht, den Schweißkopf automatisiert mit Bolzen zu bestücken.

Die DE 44 881 A1 bezieht sich auf einen Schweißbolzen der über eine Schweißverbindung an einem Träger befestigbar ist.

Die DE 38 28 459 A1 beschreibt ein Lichtbogen-Stumpfschweißverfahren mit Hubzündung zum Anschweißen von Bolzen an einem Gegenwerkstück.

Die DE 200 22 481 U1 bezieht sich auf eine Bolzenschweißvorrichtung.

Der vorliegenden Erfindung liegt dementsprechend die Aufgabe zugrunde, eine Möglichkeit anzugeben, einen Bolzen mit einer kegelartigen Stirnfläche mit einem Träger zu verschweißen, wobei die bei den bislang bekannten Verfahren bestehenden Nachteile vermieden werden sollen.

Die Aufgabe wird durch ein Verfahren gemäß Anspruch 1 sowie durch ein System gemäß Anspruch 10 gelöst. Vorteilhafte Weiterbildungen der Erfindung sind Gegenstand der Unteransprüche.

Kerngedanke der vorliegenden Erfindung ist es, die Vorteile des Kurzzeitbolzenschweißens mit den Vorteilen des Kondensatorentladungsschweißens und des Schweißens mit einem durch ein Magnetfeld abgelenkten Lichtbogens zu verbinden, was zu einem Verfahren führt, das hervorragende Schweißergebnisse liefert und gleichzeitig außerordentlich wirtschaftlich ist.

Gemäß der vorliegenden Erfindung wird dementsprechend ein Verfahren zum Verschweißen eines eine kegelartige Stirnfläche aufweisenden Bolzens mit einem Träger vorgeschlagen, bei dem zur Erzeugung eines Lichtbogens zwischen dem Bolzen und dem Träger der Bolzen zunächst senkrecht zu der Oberfläche des Trägers angesetzt und anschließend um ein bestimmtes Abhubmaß von der Trägeroberfläche abgezogen wird, wobei zumindest nach der Zündung des Lichtbogens dieser einem Quermagnetfeld ausgesetzt wird, welches derart ausgestaltet ist, dass der Lichtbogen während des Schweißvorganges seitlich abgelenkt wird und hierdurch die Stirnfläche des Bolzens ausgehend von deren Zentrum spiralförmig überstreicht. Die Stirnfläche des Bolzen weist dabei eine Neigung von 4° ± 2,5° auf und das Abhubmaß beträgt 1 bis 2,5 mm.

Die Erfindung betrifft ferner ein System zum Verschweißen eines Bolzens mit einem Träger, wobei das System aus einer Schweißvorrichtung sowie einem eine kegelartige Stirnfläche aufweisenden Bolzen besteht. Die Schweißvorrichtung weist Mittel zum Anlegen eines Schweißstroms, eine Bolzenhalterung, welche dazu ausgebildet ist, zur Erzeugung eines Lichtbogens zwischen dem Bolzen und dem Träger den Bolzen zunächst senkrecht zu der Oberfläche des Trägers anzusetzen und anschließend um ein bestimmtes Abhubmaß von der Trägeroberfläche abzuziehen, sowie eine Magnetspule zur Erzeugung eines auf den Lichtbogen einwirkenden Quermagnetfelds auf, wobei die Stirnfläche des Bolzens eine Neigung von 4° ± 2,5° aufweist und das Abhubmaß 1 bis 2,5mm beträgt. Das Magnetfeld ist dabei derart ausgestaltet, dass der Lichtbogen während des Schweißvorganges seitlich abgelenkt wird und hierdurch die Stirnfläche des Bolzens ausgehend von deren Zentrum spiralförmig überstreicht.

Erfindungsgemäß wird also ebenso wie beim MBL-Schweißen ein Quermagnetfeld eingesetzt, welches eine Ablenkung des Lichtbogens nach dessen Zündung bewirkt. Die Funktion des Quermagnetfelds wird nunmehr allerdings aufgrund der Tatsache, dass der Bolzen lediglich eine Neigung im Bereich von 4°± 2,5° aufweist und das Abhubmaß im Bereich zwischen 1 und 2,5 mm liegt, optimiert. Wie nämlich später noch ausführlicher erläutert wird, kann durch diese besondere Kombination der Verfahrensparameter erreicht werden, dass der Lichtbogen die Stirnfläche des Bolzens im Rahmen einer spiralförmigen Bewegung gleichmäßig überstreicht und dementsprechend über die gesamt Kontaktfläche hinweg eine gleichmäßige Schweißverbindung zwischen dem Bolzen und dem Träger entsteht. Gleichzeitig sind die Parameter allerdings auch derart gewählt, dass das Ansammeln größerer Tropfenmengen an Schmelzmaterial, welches zu einem möglichen Kurzschluss zwischen dem Bolzen und der Trägeroberfläche führen könnte, vermieden wird. Diese für die Erzeugung einer gleichmäßigen Schweißverbindung unerlässliche Eigenschaft ergibt sich daraus, dass bei dem erfindungsgemäßen Verfahren ein gleichmäßiges Abschmelzen der Bolzenstirnfläche sichergestellt ist und dementsprechend auch ausschließlich das für die Verbindung beider Flächen erforderliche Schweißmaterial abgeschmolzen wird. Dies wiederum bedeutet, dass das notwendige Schmelzmaterial zum Erzielen einer qualitativ hochwertigen Schweißverbindung und dementsprechend auch der erforderliche Energieaufwand minimiert wird. Infolge hiervon ergibt sich der weitere Vorteil, dass nunmehr erstmalig auch die Möglichkeit besteht, dickere Bolzen aus Vollmaterial auf verhältnismäßig dünne Träger aufzuschweißen, da für die Träger die thermische Belastung im Vergleich zu bislang bekannten Verfahren deutlich niedriger ist.

Wie bereits oben erläutert wurde, besteht ein wesentlicher Vorteil des erfindungsgemäßen Verfahrens darin, dass durch die Funktion des Quermagnetfelds sichergestellt wird, dass der Lichtbogen die Stirnfläche des Bolzens gleichmäßig überstreicht. Da dementsprechend nunmehr auch ermöglicht wird, Werkstücke mit größeren Stirnflächen auf einen Träger aufzuschweißen, wird gemäß einer vorteilhaften Weiterbildung der Erfindung vorgeschlagen, den Bolzen derart auszugestalten, dass er am Rand seiner Stirnfläche zusätzlich einen nach außen gerichteten Flansch aufweist. Ein derartiger Flansch, wie er beispielsweise aus der DE 101 57 183 C1 bekannt ist, bewirkt zunächst eine nochmalige Vergrößerung der Oberfläche der Stirnfläche des Bolzens, was allerdings - wie bereits erwähnt - aufgrund der vorteilhaften Wirkung des Quermagnetfelds auf den Lichtbogen nicht weiter problematisch ist.

Der Vorteil des Flansches besteht allerdings darin, dass dieser Flansch nunmehr die Möglichkeit eröffnet, ohne größeren Aufwand die Bolzen automatisiert dem Schweißkopf einer Schweißvorrichtung zuzuführen. Der Flansch ermöglicht hierbei eine einfachere Handhabung der Bolzen und insbesondere auch die erforderliche Ausrichtung dieser während der Zuführung. Im Vergleich zu den bisherigen Schweißverfahren, bei denen speziell ausgebildete Bolzen zum Einsatz kommen, bringt das Verfahren somit auch wirtschaftliche Vorteile mit sich, da für einen Nutzer der Schweißvorrichtung die Handhabung des Systems deutlich vereinfacht wird. Insbesondere können nunmehr sehr einfache Rüttler und Zuführungsvorrichtungen zum automatisieren Zuführen der Bolzen eingesetzt werden.

Ein weiterer Vorteil im Hinblick auf die Wirtschaftlichkeit des erfindungsgemäßen Verfahrens besteht schließlich auch darin, dass die zum Einsatz kommenden Bolzen einfacher und kostengünstiger, insbesondere im Rahmen eines Pressvorganges hergestellt werden können. Demgegenüber mussten die bei den herkömmlichen Verfahren eingesetzten Bolzen in teilweise sehr aufwendigen Verfahren hergestellt werden, was in deutlich höheren Herstellungskosten resultierte.

Durch Weiterbildungen des erfindungsgemäßen Verfahrens kann dieses im Hinblick auf seine Qualität und Effektivität weiter optimiert werden. So kann beispielsweise vorgesehen sein, während des Schweißvorgangs ein Schutzgas zu der Schweißstelle zu befördern. Gemäß einem besonders vorteilhaften Ausführungsbeispiel der vorliegenden Erfindung ist hierbei vorgesehen, dass eine zur Erzeugung des Quermagnetfelds verwendete Spule gleichzeitig auch zur Ummantelung der Schweißstelle und zur Zuführung des Schutzgases genutzt wird.

Insgesamt gesehen wird somit ein sehr effektives Verfahren zum Verschweißen eines Bolzens mit einem Träger angegeben, welches sowohl im Hinblick auf die Durchführbarkeit des Verfahrens als auch auf die Qualität der erzielten Schweißverbindung deutliche Vorteile mit sich bringt. Zu erwähnen ist ferner, dass das erfindungsgemäße Verfahren mit allen denkbaren Materialien durchgeführt werden kann.

Nachfolgend soll die Erfindung anhand der beiliegenden Zeichnungen näher erläutert werden. Es zeigen:
- Fig. 1: schematisch die Anordnung eines Schweißkopfes zur Durchführung des erfindungsgemäßen Verfahrens zum Verschweißen eines Bolzens mit einem Träger;
- Fig. 2: die Ausgestaltung eines bei dem erfindungsgemäßen Verfahrens zum Einsatz kommenden Bolzens und
- Fig. 3a-3e: die einzelnen Schritte des erfindungsgemäßen Bolzenschweißverfahrens.

Um eine gute Verbindung im Rahmen einer Bolzenschweißung erzielen zu können, müssen mehrere Bedingungen erfüllt sein. So wird zunächst eine möglichst geringe Schweißzeit angestrebt, um einen Materialverzug oder Materialveränderungen im Schmelzbad zu vermeiden. Gleichzeitig sollte ein minimales Schmelzvolumen für die Verbindung herangezogen werden, um einerseits die thermische Belastung und andererseits den Aufwand zum Abschmelzen des Materials zu reduzieren. Zum Erzielen einer gleichmäßigen Verbindungsfläche ist ferner eine gleichmäßige thermische Aktivierung des Bolzens und der Grundfläche des Trägers erforderlich, wobei dann der Fügeprozess in einer flüssigen Phase mit ausreichendem Fügedruck erfolgen sollte. Weitere Bedingungen für eine gute Bolzenschweißung sind, dass störende Einflüsse wie ungleichmäßige Anschmelzung durch Blaswirkung, Tropfen, Kurzschluß mit Verspritzen von flüssigem Schmelzmaterial aus dem Fügebereich oder Oberflächenverschmutzungen des Grundmaterials vermieden werden. Der Ausschluß dieser störenden Einflüsse setzt den bislang verwendeten Verfahren technische Grenzen bzw. erfordert einen deutlich höheren Aufwand bei der Anwendung des Verfahrens.

Nachfolgend soll nunmehr das erfindungsgemäße Verfahren erläutert werden, bei dem die oben genannten Voraussetzungen für eine gute Bolzenschweißung erfüllt sind und welches gleichzeitig auch sehr wirtschaftlich ist.

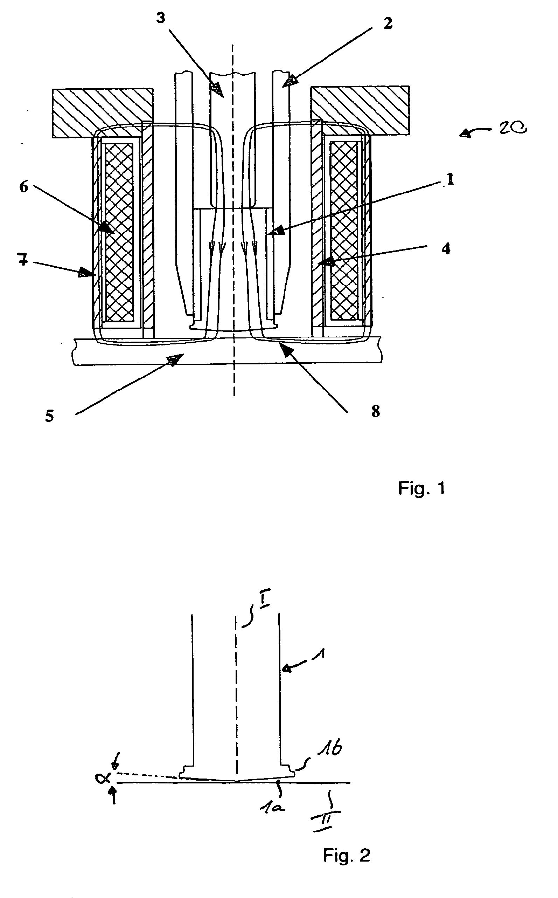

Fig. 1 zeigt hierzu zunächst im Querschnitt die Anordnung eines allgemein mit dem Bezugszeichen 20 versehenen Schweißkopfes, der zum Verschweißen eines Bolzens 1 mit einem Träger 5 bzw. allgemein einem Grundwerkstoff vorgesehen ist.

Das Verschweißen des Bolzens 1 - dessen nähere Ausgestaltung später noch ausführlicher erläutert wird - mit dem Träger 5 soll im Rahmen einer sog. Hubzündung erfolgen, bei der der Bolzen 1 zunächst im wesentlichen senkrecht zu der Oberfläche des Trägers 5 angesetzt und anschließend um ein bestimmtes Abhubmaß von der Trägeroberfläche abgezogen wird. Aufgrund des - durch nicht näher dargestellt Mittel zum Anlegen eines Schweißstromes hervorgerufenen - hohen Potentialunterschieds zwischen dem Bolzen 1 und dem Träger 5 wird hierbei ein Lichtbogen gezündet, durch den die Stirnfläche des Bolzens 1 sowie der gegenüberliegende Bereich des Trägers 5 angeschmolzen wird.

Um die vorbeschriebene Hubzündung durchführen zu können, weist der Schweißkopf 20 demzufolge einen entsprechenden Bolzenhalter 2 auf, der den Bolzen 1 während des Schweißvorgangs hält und die erforderlichen Hub- und Absenkbewegungen durchführt. Nach Beendigung der Schweißung wird der auf den Träger 5 aufgeschweißte Bolzen 1 abgestoßen, was mit Hilfe eines sich im Zentrum des Bolzenhalters 2 befindlichen Stößels 3 erzielt wird.

Eine weitere Komponente des Schweißkopfes 20 ist ein Innenrohr 4, welches den Bolzenhalter 2 mit dem Bolzen 1 umgibt und während des Schweißvorgangs die Schweißstelle ummantelt. Dieses Innenrohr 4 ist mit einer nicht weiter dargestellten Zuführungsleitung für ein Schutzgas verbunden und dient dementsprechend dazu, während des Schweißvorganges ein für das Material geeignetes Schutzgas zu der Schweißstelle zu befördern und in diesem Bereich zu halten, um die Porenbildung zu vermeiden bzw. zu verringern.

Die letzte wesentliche Komponente des Schweißkopfes 20 ist schließlich eine von Gleichstrom durchflossene ringförmige Spule 6, welche das innere Schutzgasrohr 4 umgibt und zur Erzeugung eines Magnetfelds 8 vorgesehen ist. Die Feldlinien dieses Magnetfelds 8 sind in Fig. 1 ebenfalls dargestellt, wobei der Darstellung entnommen werden kann, dass das Magnetfeld 8 derart ausgestaltet ist, dass im Bereich der Schweißstelle im wesentlichen eine Querkomponente erzielt wird. Wie später noch näher erläutert wird, wird mithilfe des Magnetfelds 8 dann der Lichtbogen während des Schweißvorganges abgelenkt, um in erfindungsgemäßer Weise die Stirnfläche des Bolzens 1 gleichmäßig zu überstreifen. Die rotationssymmetrische Ausgestaltung des Magnetfelds 8 wird insbesondere auch noch durch einen die Spule 6 umgebenden äußeren Feldkonzentrator 7 erzielt, der den geeigneten Verlauf der Feldlinien des Magnetfelds 8 sicherstellt.

Bevor das erfindungsgemäße Verfahren detailliert beschrieben wird, soll zunächst noch auf die besondere Ausgestaltung des Bolzens 1 näher eingegangen werden. Entsprechend der Darstellung in Fig. 2 weist dieser zunächst ebenso wie die bislang verwendeten Bolzen eine im wesentlichen kegelartige Stirnfläche 1a auf. Im Vergleich zu den bekannten Bolzen unterscheidet sich allerdings der erfindungsgemäß verwendete Bolzen 1 durch zwei Merkmale, nämlich zum einen durch die Verwendung eines Außenflansches 1b sowie zum anderen durch die sehr geringe Bolzenneigung.

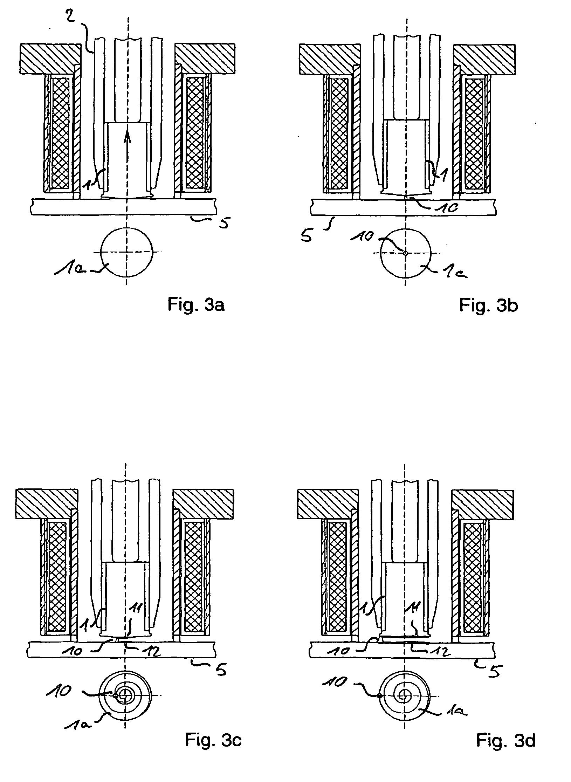

Für das erfindungsgemäße Schweißverfahren ist zunächst die geringe Neigung der Stirnfläche 1a des Bolzens 1 von Bedeutung. Entsprechend der Darstellung in Fig. 2 nimmt die Oberfläche im Vergleich zu einer senkrecht zur Längsachse I des Bolzens 1 angeordneten Ebene II einen Winkel α ein, der erfindungsgemäß 4° ± 2,5° beträgt, also im Bereich zwischen 1,5° und 6,5° liegt. Wie später noch anhand der Figuren 3a bis 3e erläutert wird, können durch diese besonders niedrige Bolzenneigung gleichzeitig mehrere Vorteile erzielt werden, welche einerseits zu einem sehr wirtschaftlichen Schweißverfahren führen und andererseits eine hohe Güte der Schweißverbindung sicherstellen.

Das zweite besondere Merkmal des erfindungsgemäßen Bolzens 1 ist wie gesagt ein am Außenrand der Stirnfläche 1a befindlicher Flansch 1b. Dieser trägt zwar nicht unmittelbar zur Verbesserung der Schweißverbindung bei, er bringt allerdings den Vorteil mit sich, dass hierdurch der Bolzen 1 leichter gehandhabt werden kann. Insbesondere ermöglicht dieser Außenflansch 1b eine automatisierte Handhabung durch Zuführungsvorrichtungen, welche ein automatisches Bestücken des Schweißkopfes 20 mit den Bolzen 1 ermöglichen. Der Flansch 1b wird hierbei dazu verwendet, den Bolzen 1 lagerichtig zu orientieren und dem Schweißkopf 20 zuzuführen. Die erfindungsgemäße Schweißvorrichtung kann dementsprechend durch eine automatische Zuführungsvorrichtung erweitert werden, welche den Schweißkopf 20 automatisch mit neuen Bolzen 1 bestückt.

Anzumerken ist ferner, dass die besondere Gestalt des Bolzens 1, der insbesondere einen Durchmesser von 6-20 mm aufweisen kann, auch dazu beiträgt, dass dieser in einfacher und effektiver Weise, beispielsweise im Rahmen eines Preßvorganges hergestellt werden kann. Derartige Herstellungsverfahren sind deutlich günstiger als die Spezialverfahren, mit denen die speziell ausgestalteten Schweißbolzen bislang hergestellt werden mußten.

Mit dem erfindungsgemäß ausgestalteten Schweißkopf 20 sowie dem Bolzen 1 kann nunmehr also eine Schweißung durchgeführt werden, wie sie in den Figuren 3a-3e dargestellt ist. Die fünf Darstellungen zeigen dabei die einzelnen Schritte des erfindungsgemäßen Schweißverfahrens, wobei insbesondere auch die Position des Lichtbogens bzw. dessen Bewegung dargestellt ist.

Wie bereits zuvor erwähnt wurde, beruht das erfindungsgemäße Verfahren zunächst auf dem Prinzip der sogenannten Hubzündung. Hierbei wird der Bolzen 1 in einem ersten Schritt mit Hilfe des Bolzenhalters 2 im wesentlichen senkrecht zu der Oberfläche des Trägers 5 an diesen angesetzt und nach Anlegen des Schweißstroms, der je nach Durchmesser des Bolzens im Bereich zwischen 400 A und 1.200 A liegt, um ein vorgegebenes Abhubmaß angehoben, wie dies in Fig. 3b dargestellt ist. Das erfindungsgemäße Verfahren wird bei einem minimalen Abhubmaß durchgeführt, so dass sich eine Spaltbreite zwischen der Bolzenstirnfläche und der Oberfläche des Trägers 5 ergibt, die je nach Durchmesser des Bolzens im Bereich zwischen 1 und 2,5 mm liegt.

Wird also der Bolzen 1 von der Oberfläche des Trägers 5 abgezogen, so zündet entsprechend der Darstellung in Fig. 3b ein Pilotlichtbogen 10, der aufgrund der kegelartigen Ausgestaltung der Stirnfläche des Bolzens 1 sich zunächst im Zentrum des Bolzens 1 befindet. In diesem Stadium entsteht sowohl an der Spitze des Bolzens 1 als auch am gegenüberliegenden Bereich des Trägers 5 eine flüssige Schmelzbadlinse 12 bzw. 12. Zeitgleich mit dem Abhub des Bolzens 1 wird ferner auch der Stromfluss durch die Spule 6 zugeschaltet, um das Quermagnetfeld 8 zu erzeugen.

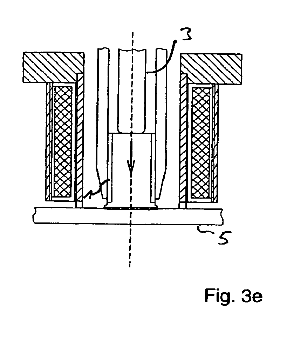

Die Ansatzbedingungen des Lichtbogens 10 sind am Rand dieser flüssigen Schmelze 11, 12 günstiger als im Bereich ohne flüssige Schmelze, weshalb sich der Lichtbogen 10 im wesentlichen am Randbereich dieser Schmelzbadlinse 11, 12 anordnen wird. Aufgrund des durch die Spule 6 hervorgerufenen Quermagnetfelds wird allerdings der Lichtbogen 10 seitlich abgelenkt, was zur Folge hat, dass dieser sich kreisförmig am Rand der Schmelzzone entlang bewegt. Da allerdings der Lichtbogen 10 permanent thermische Energie auf den Bolzen 1 bzw. das Trägermaterial 5 überträgt, wird sich der Durchmesser dieser Schmelzlinse 11, 12 permanent ausdehnen. Dies führt letztendlich entsprechend den Darstellungen in den Fig. 3c und 3d dazu, dass der Lichtbogen 10 eine kreisförmige Bewegung durchführt, wobei allerdings der Durchmesser des Kreises permanent ansteigt. Letztendlich bedeutet dies, dass der Lichtbogen 10 spiralförmig die Stirnfläche des Bolzens 1 bzw. den gegenüberliegenden Bereich der Trägeroberfläche überstreicht, bis schließlich nach ca. 80 Umläufen (wobei die Anzahl der Umläufe selbstverständlich auch von dem Durchmesser des Bolzens abhängt) des Lichtbogens 10 gemäß der Darstellung in Fig. 3d der gesamte Fügebereich der Bolzenoberfläche bzw. des Grundmaterials angeschmolzen wurde. Zu diesem Zeitpunkt wird der Schweißvorgang beendet und entsprechend der Darstellung in Fig. 3e der Fügevorgang eingeleitet. Der Bolzen 1 wird hierbei auf die gegenüberliegende Fläche des Trägers 5 gepresst und mit diesem verbunden.

Wesentlich ist, dass die Vergrößerung der Schmelzbadoberfläche während der spiralförmigen Bewegung des Lichtbogens 10 auch zu einer größeren Oberflächenspannung der Schmelze führt, was wiederum die Bildung von größeren Tropfen verhindert, die eventuell zu einem Kurzschluss führen könnten. Gleichzeitig erfolgt durch den geringen Spalt zwischen der Bolzenstirnfläche und dem Träger 5 ein thermischer Ausgleich zwischen Bolzenfläche und Grundmaterial, durch welchen der Prozess thermisch stabilisiert wird. Hierdurch ergibt sich auch der Vorteil, dass die zum Abschmelzen des Bolzen- und Trägermaterials erforderliche Leistung weiter reduziert wird und dementsprechend ein niedrigerer Energieaufwand erforderlich ist. Ein weiterer Vorteil besteht darin, dass der Lichtbogen in diesem Fall gemeinsam mit dem Magnetfeld zur Stabilisierung der Schmelzbadoberfläche beiträgt, was insbesondere in solchen Fällen eine Rolle spielt, in denen in Zwangslagen, also beispielsweise gegen eine vertikale Grundfläche bzw. Wand oder überkopf geschweißt werden muss. Das erfindungsgemäße Verfahren eignet sich daher auch zum maschinellen Einsatz.

Entsprechend der obigen Beschreibung ist der Schweißprozess also derart ausgestaltet, dass ein minimaler Schweißspalt verwendet wird und der Prozess ohne Tropfenkurzschluss abläuft. Durch die spiralförmige Bewegung des Lichtbogens vom Zentrum in den Außenbereich am Rand des Schmelzbades wird eine große Fläche am Bolzen gleichmäßig angeschmolzen, die das flüssige Material durch ihre Oberflächenspannung aufsaugt und so örtliche Kurzschlüsse vermeidet. Durch die gesteuerte Bewegung des Lichtbogens auf der gesamten Bolzenoberfläche kann ferner das Verfahren mit deutlich geringen Strömen und Stromdichten betrieben werden, als dies bislang der Fall war. Im Vergleich zum Kurzzeitbolzenschweißen kann gemäß der vorliegenden Erfindung beispielsweise ein Bolzen mit einem Durchmesser von 12mm anstatt mit 1.300 A bereits mit 800 A und trotz allem mit besserer Schweißqualität verschweißt werden. Es können also Schweißströme eingesetzt werden, die unterhalb der von der DIN ISO 14555 empfohlenen Werte liegen. Hierdurch sinkt auch der Investitionsaufwand für die zu verwendenden Stromquellen, was ebenfalls zur Verbesserung der Wirtschaftlichkeit des Verfahrens beiträgt. Im Gegensatz zum Kurzzeitlichtbogenschweißen ist ferner das Verfahren problemlos für Bolzen mit einem Durchmesser von bis zu 20 mm einsetzbar.

Festgestellt werden kann damit, dass das erfindungsgemäße Verfahren die Vorteile der drei oben genannten Verfahren kombiniert.

Der wesentliche Vorteil des Kondensatorentladungsschweißens, nämlich lediglich soviel Schmelze zu erzeugen, wie für die Verbindung zwischen Bolzen und Träger benötigt wird, kommt auch bei dem erfindungsgemäßen Verfahren zum Einsatz, was u.a. ein Resultat der sehr geringen Bolzenneigung ist. Gleichzeitig wird allerdings ein Anschmelzen des gesamten Bolzenquerschnitts für eine optimale Fügeverbindung bei geringem Spaltmaß erzielt.

Der wesentliche Vorteil der Hubzündung als robustes Verfahren mit ausreichendem Wärmeeintrag in das Grundmaterial wird ebenfalls genutzt, wobei nunmehr auch der Einfluß der Oberflächenrauhigkeit oder geringfügiger Oberflächenverschmutzung reduziert wird.

Schließlich wird insbesondere auch der Vorteil des MBL-Schweißens, nämlich der gesteuerten Bewegung des Lichtbogens an der Schweißfläche genutzt. Der neue Prozess wird durch Verwendung des zusätzlichen Magnetfelds völlig unabhängig von Blaswirkung, indem das Lichtbogenfeld durch das Quermagnetfeld überlagert wird und damit eine mögliche Blaswirkung unterdrückt. Hierdurch ist auch eine vereinfachte Masseklemmung am Bauteil möglich. Insbesondere sind auch einseitige Masseanmklemmungen auch bei mehreren Schweißungen an einem Bauteil unproblematisch. Aufgrund der Wirkung des Magnetfelds sind somit insbesondere auch Schweißungen in Zwangslagen ohne Schweißbadschutz möglich.

Abschließend ist anzumerken, dass das erfindungsgemäße Verfahren problemlos für Bolzen aus unterschiedlichsten Materialien, insbesondere aus Stahl (wobei der Bolzen dann auch zum Schutz gegen Korrosion eine geeignete schweißfähige Oberflächenbeschichtung aufweisen kann), Edelstahl oder Aluminium eingesetzt werden kann. Auch die Ausgestaltung der Bolzen im sich an die Stirnfläche anschließendem Bereich ist vollkommen unabhängig von der vorliegenden Erfindung. So können Gewindebolzen, Stifte, in den Gewindebuchsen oder auch Sonderbolzen verwendet werden.

## Patentansprüche

1. Verfahren zum Verschweißen eines eine kegelartige Stirnfläche (1a) aufweisenden Bolzens (1) mit einem Träger (5),
wobei zur Erzeugung eines Lichtbogens (10) zwischen dem Bolzen (1) und dem Träger (5) der Bolzen (1) zunächst senkrecht zu der Oberfläche des Trägers (5) angesetzt und anschließend um ein bestimmtes Abhubmaß von der Trägeroberfläche abgezogen wird,
**dadurch gekennzeichnet, daß**zumindest nach der Zündung des Lichtbogens (10) dieser einem Quermagnetfeld (8) ausgesetzt wird, welches derart ausgestaltet ist, dass der Lichtbogen (10) während des Schweißvorganges seitlich abgelenkt wird und hierdurch die Stirnfläche (1a) des Bolzens (1) ausgehend von deren Zentrum spiralförmig überstreicht, und
wobei die Stirnfläche (1a) des Bolzens (1) eine Neigung (α) von 4° ± 2,5° aufweist und das Abhubmaß 1 bis 2,5mm beträgt.

2. Verfahren nach Anspruch 1,
**dadurch gekennzeichnet,**
**dass** der Bolzen (1) am Rand seiner Stirnfläche (1a) einen nach außen gerichteten Flansch (1b) aufweist.

3. Verfahren nach Anspruch 2,
**dadurch gekennzeichnet,**
**dass** mehrere Bolzen (1) automatisiert zu einem die Bolzen (1) während des Schweißvorganges haltenden Bolzenhalter (1) nachgeführt werden.

4. Verfahren nach einem der vorherigen Ansprüche,
**dadurch gekennzeichnet,**
**dass** der Bolzen (1) einen Durchmesser von ca. 6 bis 20 mm aufweist.

5. Verfahren nach einem der vorherigen Ansprüche,
**dadurch gekennzeichnet,**
**dass** ein Schweißstrom im Bereich zwischen 400 und 1200 A angelegt wird.

6. Verfahren nach einem der vorherigen Ansprüche, **dadurch gekennzeichnet, dass** während des Schweißvorganges ein Schutzgas zu der Schweißstelle gefördert wird.

7. Verfahren nach Anspruch 6, **dadurch gekennzeichnet, dass** eine zur Erzeugung des Quermagnetfelds (8) verwendete Spule (6) von Gleichstrom durchflossen ist, welche inneres Schützgasrohr (4) umgibt.
**dass** während des Schweißvorganges ein Schutzgas zu der Schweißstelle gefördert wird.

8. Verfahren nach Anspruch 7,
**dadurch gekennzeichnet,**
**dass** die zur Erzeugung des Quermagnetfelds (8) verwendete Spule (6) zur Ummantelung der Schweißstelle und Zuführung des Schutzgases genutzt wird.

9. Verfahren nach einem der vorherigen Ansprüche,
**dadurch gekennzeichnet,**
**dass** der Bolzen (1) aus Stahl, Edelstahl oder Aluminium besteht.

10. System zum Verschweißen eines Bolzens (1) mit einem Träger (5), bestehend aus einer Schweißvorrichtung (20) sowie einem eine kegelartige Stirnfläche (1a) aufweisenden Bolzen (1),
wobei die Schweißvorrichtung (20) aufweist:
a) Mittel zum Anlegen eines Schweißstroms,
b) einen Bolzenhalter (2), welcher dazu ausgebildet ist, zur Erzeugung eines Lichtbogens (10) zwischen dem Bolzen (1) und dem Träger (5) den Bolzen (1) zunächst senkrecht zu der Oberfläche des Trägers (5) anzusetzen und anschließend um ein bestimmtes Abhubmaß von der Trägeroberfläche abzuziehen, kenngezeichnet durch
c) eine Magnetspule (6) zur Erzeugung eines auf den Lichtbogen (10) einwirkenden Quermagnetfelds (8), welches derart ausgestaltet ist, dass der Lichtbogen (10) während des Schweißvorganges seitlich abgelenkt wird und hierdurch die Stirnfläche (1a) des Bolzens (1) ausgehend von deren Zentrum spiralförmig überstreicht,
und wobei die Stirnfläche (1a) des Bolzens (1) eine Neigung (α) von 4° ± 2,5° aufweist und das Abhubmaß 1 bis 2,5mm beträgt.

11. System nach Anspruch 10,
**dadurch gekennzeichnet,**
**dass** der Bolzen (1) am Rand seiner Stirnfläche (1a) einen nach außen gerichteten Flansch (1b) aufweist.

12. System nach Anspruch 11,
**dadurch gekennzeichnet,**
**dass** die Schweißvorrichtung (20) eine Vorrichtung zur automatisierten Zuführung von Bolzen (1) zu dem Bolzenhalter (2) aufweist.

13. System nach einem der Ansprüche 10 bis 12,
**dadurch gekennzeichnet,**
**dass** der Bolzen (1) einen Durchmesser von ca. 6 bis 20 mm aufweist.

14. System nach einem der Ansprüche 10 bis 13,
**dadurch gekennzeichnet,**
**dass** die Schweißvorrichtung (20) Mittel zum Zuführen eines Schutzgases zu der Schweißstelle aufweist.

15. System nach Anspruch 14,
**dadurch gekennzeichnet,**
**dass** die Spule (6) zur Erzeugung des Quermagnetfelds (8) von Gleichstrom durchflossen sein kann.

## Claims

1. Method of welding a bolt (1) having a cone-like end face (1a) to a carrier (5),
wherein for the production of an electric arc (10) between the bolt (1) and the carrier (5), the bolt (5) is initially placed perpendicularly of the surface of the carrier (5) and then withdrawn by a certain lift-off amount from the carrier surface,
**characterised in that**,
at least after the ignition of the electric arc (10) this is exposed to a transverse magnetic field (8) which is so configured that the electric arc (10) during the welding process is deflected laterally and through this passes over the end face (1a) of the bolt (1), starting from its center, in spiral form, and
wherein the end face (1a) of the bolt (1) has an inclination (α) of 4° ± 2,5° and the lift-off amount is 1 to 2.5 mm.

2. Method according to claim 1,
**characterised in that**,
on the edge of its end face (1a) the bolt (1) has an outwardly directed flange (1b).

3. Method according to claim 2,
**characterised in that**,
a plurality of bolts (1) are delivered in automatic manner to a bolt holder (1) which holds the bolts (1) during the welding process.

4. Method according to any preceding claim,
**characterised in that**,
the bolt (1) has a diameter of ca. 6 to 20 mm.

5. Method according to any preceding claim,
**characterised in that**,
there is applied a welding current in the range between 400 and 1200 A.

6. Method according to any preceding claim,
**characterised in that**,
a protective gas is transported to the welding site during the welding process.

7. Method according to claim 6,
**characterised in that**,
a coil (6) used for the production of the transverse magnetic field (8) is flowed through by d.c. current, which surrounds an inner protective gas pipe (4).

8. Method according to claim 7,
**characterised in that**,
the coil (6) used for the production of the transverse magnetic field (8) is used for sheathing of the weld site and delivery of the protective gas.

9. Method according to any preceding claim,
**characterised in that**,
the bolt (1) is of steel, stainless steel or aluminium.

10. System for welding a bolt (1) to a carrier (5), comprised of a welding device (20) and a bolt (1) having a cone-like end face (1a),
wherein the welding device (20) has:
a) means for applying a welding current,
b) a bolt holder (2) which is configured for the production of an electric arc (10) between the bolt (1) and the carrier (5), initially to apply the bolt (1) perpendicularly to the surface of the carrier (5), and then to withdraw it from the carrier surface by a certain lift-off amount,
**characterised by**
c) a magnet coil (6) for the production of a transverse magnetic field (8) acting on the electric arc (10), which is configured such that the electric arc (10) during the welding process is deflected laterally and through this passes spirally over the end face (1a) of the bolt (1) starting from the centre thereof,
and wherein the end face (1a) of the bolt (1) has an inclination (α) of 4° ± 2,5° and the lift-off amount is 1 to 2.5 mm.

11. System according to claim 10,
**characterised in that**,
the bolt (1) has on the edge of its end face (1a) an outwardly directed flange (1b).

12. System according to claim 11,
**characterised in that**,
the welding device (20) has a device for the automated delivery of bolts (1) to the bolt holder (2).

13. System according to any of claims 10 to 12,
**characterised in that**,
the bolt (1) has a diameter from ca. 6 to 20 mm.

14. System according to any of claims 10 to 13,
**characterised in that**,
the welding device (20) has means for delivering a protective gas to the weld site.

15. System according to claim 14,
**characterised in that**,
the coil (6) for the production of the transverse magnetic field (8) can be flowed through by d.c. current.

## Revendications

1. Procédé de soudage d'un goujon (1) présentant une surface frontale conique (1a) sur un support (5),
dans lequel, pour générer un arc électrique (10) entre le goujon (1) et le support (5), le goujon (1) est d'abord appliqué perpendiculairement à la surface du support (5) avant d'être décollé de la surface du support en respectant une cote de soulèvement définie,
**caractérisé en ce qu'**au moins après l'allumage de l'arc électrique (10), ce dernier est exposé à un champ magnétique transversal (8) prévu de manière à dévier latéralement l'arc électrique (10) pendant le soudage, lequel balaie alors la surface frontale (1a) du goujon (1) en spirale à partir de son centre, et
**en ce que** la surface frontale (1a) du goujon (1) présente une inclinaison (α) de 4 ° ± 2,5 ° et la cote de soulèvement est comprise entre 1 et 2,5 mm.

2. Procédé selon la revendication 1,
**caractérisé**
**en ce que**, sur le bord de sa surface frontale (1a), le goujon (1) comporte un rebord (1 b) saillant vers l'extérieur.

3. Procédé selon la revendication 2,
**caractérisé**
**en ce que** plusieurs goujons (1) sont automatiquement avancés vers un organe de maintien de goujons (2) maintenant les goujons (1) pendant le soudage.

4. Procédé selon l'une des revendications précédentes,
**caractérisé**
**en ce que** le goujon (1) présente un diamètre compris entre 6 et 20 mm environ.

5. Procédé selon l'une des revendications précédentes,
**caractérisé**
**en ce qu'**un courant de soudage compris entre 400 et 1200 A est appliqué.

6. Procédé selon l'une des revendications précédentes,
**caractérisé**
**en ce qu'**un gaz inerte est refoulé vers le point de soudure pendant le soudage.

7. Procédé selon la revendication 6,
**caractérisé**
**en ce qu'**une bobine (6) utilisée pour générer le champ magnétique transversal (8) est traversée par un courant continu, et entoure une conduite intérieure de gaz inerte (4).

8. Procédé selon la revendication 7,
**caractérisé**
**en ce que** la bobine (6) utilisée pour générer le champ magnétique transversal (8) est utilisée pour protéger le point de soudure et conduire le gaz inerte.

9. Procédé selon l'une des revendications précédentes,
**caractérisé**
**en ce que** le goujon (1) est en acier, en acier inoxydable ou en aluminium.

10. Système de soudage d'un goujon (1) sur un support (5), composé d'un dispositif de soudage (20) ainsi que d'un goujon (1) présentant une surface frontale conique (1a),
dans lequel ledit dispositif de soudage (20) comporte :
a) des moyens d'application d'un courant de soudage,
b) un organe de maintien de goujon (2) prévu pour générer un arc électrique (10) entre le goujon (1) et le support (5), en appliquant d'abord le goujon (1) perpendiculairement à la surface du support (5), avant de le décoller de la surface du support en respectant une cote de soulèvement définie,
**caractérisé par**
c) une bobine magnétique (6) pour générer un champ magnétique transversal (8) agissant sur l'arc électrique (10), prévu de manière à dévier latéralement l'arc électrique (10) pendant le soudage, lequel balaie alors la surface frontale (1a) du goujon (1) en spirale à partir de son centre,
et dans lequel la surface frontale (1a) du goujon (1) présente une inclinaison (α) de 4 ° ± 2,5 ° et la cote de soulèvement est comprise entre 1 et 2,5 mm.

11. Système selon la revendication 10,
**caractérisé**
**en ce que**, sur le bord de sa surface frontale (1a), le goujon (1) comporte un rebord (1b) saillant vers l'extérieur.

12. Système selon la revendication 11,
**caractérisé**
**en ce que** le dispositif de soudage (20) comprend un dispositif d'avance automatique de goujons (1) vers l'organe de maintien de goujons (2).

13. Système selon l'une des revendications 10 à 12,
**caractérisé**
**en ce que** le goujon (1) présente un diamètre compris entre 6 et 20 mm environ.

14. Système selon l'une des revendications 10 à 13,
**caractérisé**
**en ce que** le dispositif de soudage (20) comprend un moyen de conduction d'un gaz inerte vers le point de soudure.

15. Système selon la revendication 14,
**caractérisé**
**en ce que** la bobine (6) pour générer le champ magnétique transversal (8) peut être traversée par un courant continu.
